# EUROPEAN PATENT SPECIFICATION

(11) **EP 3 160 227 B1**
(45) Date of publication and mention of the grant of the patent: **27.11.2019**
(21) Application number: 15731603.5
(22) Date of filing: 26.06.2015
(51) Int. Cl.: A01N 43/50, A01P 13/00

(54) **SEED TREATMENT WITH ACETOLACTATE SYNTHASE (ALS) INHIBITORS**
SAATGUTBEHANDLUNG MIT INHIBITOREN DER ACETOLACTATSYNTHASE (ALS)
TRAITEMENT DES SEMENCES À L'AIDE D'INHIBITEURS DE L'ACÉTOLACTATE SYNTHASE (ALS)

(30) Priority: 26.06.2014 US 201462017273 P; 21.07.2014 EP 14177820
(43) Date of publication of application: 03.05.2017
(60) Divisional application: 19173206.4
(73) Proprietor: BASF Agrochemical Products B.V., 6835 EA Arnhem (NL)
(72) Inventor: PFENNING, Matthias, 67365 Schwegenheim (DE)
(74) Representative: BASF IP Association
(86) International application number: PCT/EP2015/064555
(87) International publication number: WO 2015/197831

(56) References cited:
- WO-A1-2013/037735
- WO-A1-2013/083377
- WO-A1-2013/087658
- US-A1- 2011 209 232
- US-A1- 2012 117 676
- US-A1- 2014 005 047

## Description

The invention relates to methods for controlling parasitic weeds of host plants, comprising the treatment of seed with a composition comprising at least one acetolactate synthase (ALS) inhibitor.

### Background of the Invention

Parasitic weeds derive some or all of their sustenance from another plant by penetrating the host's tissue and drawing nutrients from the host plant (W. Koch, M. Kunisch, PLITS 1989/7 (2), Principles of Weed Management, 22-26). This occurs either through the stem, e.g. in Cuscuta spp., or from the root tissue, e.g. Striga spp. (witchweeds) and Orobanche spp. (broomrape). Plants parasitizing on roots cause significant damage in crops before emergence and thus lead to high economical losses. Therefore, handpulling or mechanical weeding may prevent the parasite from seed setting. However, these measures come too late to prevent crop losses. The longevity of the seeds of parasitic species is relatively high. In addition, crop rotation or fallow is often not practical since intervals between the cultivation of susceptible crops have to be 5 to 10 years depending on the specific system. Conferring resistance against parasitic weeds on crop plants through selection or genetic modification is only partly successful as parasitic weeds are able to adopt to such changes quickly (Honiges, A., Wegmann, K. and Ardelean, A. HELIA, 31 , Nr. 49, p.p. 1 -12, (2008)).

Seed treatment is a process of applying active ingredients to seeds in order to support the germination and/or the growth of a large variety of crops.

Being an alternative to traditional broadcast spraying of pesticides, seed treatment compositions must fulfill a number of special requirements which include their applicability to seeds in commercial equipment, the adhesion of the active ingredients to the treated seeds, and good flowability of the treated seeds. Of course, the treated seeds must still be capable of germination.

Acetolactate synthase (ALS), also known as acetohydroxy acid synthase (AHAS), is an enzyme found in plants and micro-organisms. ALS catalyzes the first step in the synthesis of branched-chain amino acids such as valine, leucine, isoleucine. The enzyme typically comprises a large subunit (AHASL.) and a small subunit. Further, at least three isozymes, namely AHAS1, AHAS2 and AHAS3, are known.

ALS inhibitors are herbicidally active compounds which inhibit the branched chain amino acid biosynthesis. They belong to group B of the HRAC classification system.

WO 2013/083377 A1 discloses a method of controlling undesirable vegetation in cultures of crop plants using a composition *inter alia* comprising the ALS inhibitor imidazolinone in which a composition comprising a herbicide and an adjuvant is applied pre- or post-emergence, i.e. before, during and/or after emergence of the undesirable plants. The composition can be applied after seeding and before or after the emergence of crop plants. The composition can also be applied prior to seeding of the crop plants.

WO 2013/037735 A1 discloses a method of controlling parasitic weeds, i.e. weeds which derive some or all of their sustenance from a host plant by penetrating the host plant's tissue and drawing nutrients from the host plant. The method comprises applying to the host plant, the weeds and/or their habitat a herbicidal mixture comprising at least one acetolactate synthase (ALS) inhibitor and at least one plant growth regulator. The herbicidal composition can be applied before, during and/or after the emergence or penetration of the host roots by the undesirable parasitic weeds. The herbicidal composition can be applied pre- or post-emergence or together with the seed of a crop plant. The composition can also be applied to the seeds of the host plant.

US 2011/0209232 A1 discloses plants having increased herbicide-resistance in comparison to a wild-type plant, and a method of controlling weeds in the vicinity of such herbicide-resistant plants by applying an effective amount of a herbicide, in particular imidazolinone or sulfonyl urea herbicides.

US 2012/0117676 A1 discloses seeds coated with or containing a seed treatment formulation, comprising at least one acetohydroxyacid synthase (AHAS)-inhibiting herbicide. Likewise, a method for applying an effective amount of an ALS inhibitor to one or more soybean plants comprising an *"event 127"* nucleic acid molecule is disclosed.

WO 2013/087658 A1 discloses synergistic fungicidal, insecticidal, or pesticidal compositions comprising a Quillay extract and an Acacia negra extract and the treatment of seeds of host plants with these compositions

US 2014/0005047 A1 discloses compositions comprising fluopyram for the control of phyto-pathogenic fungi and animal pests. These compositions can also be applied to the seeds of the host plant.

There are only few selective herbicides that control root parasitic weeds while they are still underground. In order to prevent damage to the host plant, a systemic herbicide that can translo-cate within the host plant must be applied in concentrations which are non-toxic to the host For this reason, there is a strong need in the agrochemical industry to provide new methods and chemical compositions for the efficient control of root parasitic weeds like, for example, Orobanche spp. and Striga spp..

It is an object of the present invention to provide new methods for parasitic weed control.

### Summary of the Invention

The object was solved by a method for controlling parisitc weeds of host plants comprising the step of treating the seed of said host plants with a composition comprising an acetolactate synthase (ALS) inhibitor or an agriculturally acceptable salt or derivative thereof, wherein the composition comprises as the ALS inhibitor an imidazolinone selected from the group consisting of imazamox, wherein the step of treating the seed with an ALS inhibitor is followed by the step of a treatment of the emerged host plants with a composition comprising an acetolactate synthase (ALS) inhibitor or an agriculturally acceptable salt or derivative thereof, wherein the ALS inhibitor is imazamox, wherein the agriculturally acceptable derivative is a carboxyl group derivative selected from a carboxylic acid, a carboxamide or a carboxylic acid ester.

### Detailed Description

The seed treatment may comprise the steps of dusting, slurrying, soaking, coating or pelleting the seed. Further, commonly known methods of seed treatment according to the present invention are described, for example in WO 2010/107312 A1 and "Applicator Training Manual for: SEED TREATMENT PEST CONTROL; Dennis M TeKrony, University of Kentucky", 1976 ERIC clear-inghouse.

The ALS inhibitor is imazamox.

In a preferrred embodiment, the parasitic weed comprises weed from the genus Orobanche, from the genus Conopholis, from the genus Striga, or from the genus Cuscuta. Non-limiting examples of weed from the genus Orobanche include Orobanche aegyptiaca pers., O. ramosa L., O. mino Sm., O. crenata Forsk, O. cumana Wallr. and O. cernua Loefl. These examplatory parasitic weeds are known to afflict plants such as Apiaceae, Asteraceae, Brassicaceae, Cannabiceae, Chenopodiaceae, Cucurbitaceae, Fabaceae, Liliaceae, Malvaceae and Solanaceae.

Non-limiting examples of the genus Conopholis include Conopholis alpina and Conopholis Americana.

Non-limiting examples of weed from the genus Striga include Striga hermonthica and Striga asiatica. Affected host plants are for example maize, millet, rice, sorghum and sugarcane.

Non-limiting examples of the genus Cuscuta include Cuscuta approximata, Cuscuta californica, Cuscuta epithymum, Cuscuta europaea, Cuscuta pentagona and Cuscuta salina. These examplatory parasitic weeds are known to afflict plants such as Alfalfa, clover, tomatoes and potatoes, onion (*Allium cepa L*.) and chilli (*Capsicum annum L*). and beets (*Beta vulgaris*).

In another preferred embodiment, the host plants comprise plants of the family of Asteracea, such as Helianthus annuus; Brassicaceae such as B. napus, B. rapa, B. juncea; Poaceae such as Zea mays or Oryza sativa; Leguminosae (Fabaceae) such as Trifolium spp, Glycine max, Pisa spp, Vicia spp or Medicago spp; Solanaceae such as *Solanum tuberosum, Solanum lycopersicum Solanum melongena, Nicotiana tabacum.*

In one preferred embodiment, the host plants may comprise plants such as *Helianthus annuus Brassica napus, Brassica rapa, Brassical juncea, Glycine max (*soybean), *Sorghum, Triticum spp (*Wheat), *Lens culinaris (*lentil*), Hordeum vulgare (*Barley*),* Dry Bean (phaseolus spp), *Vigna unguiculata (cowpea)* or combinations thereof.

In another embodiment, the host plant contains at least one herbicide tolerance trait, wherein the AHASL (acetohydroxyacid synthase large subunit) protein comprises at least one amino acid substitution. However, the AHASL substitutiont may also result in different trait, such as a trait of an increased grain yield or a more favourable seed protein profile. In another preferred embodiment, the herbicide tolerance trait is in combination with one or more of said different traits.

In yet another preferred embodiment, the host plant may have a herbicide tolerance trait, preferably providing a tolerance towards at least one ALS inhibitor. The herbicide tolerant plant may either be homozygous or heterozygous for the herbicide tolerance trait. Preferably, one or more amino acid substitution(s) in one trait in a heterozygous state may be sufficient to produce a level of herbicide tolerance that is sufficient for many crop productions systems. However, for particular herbicide applications, and particularly in cases with crop plants having multiple AHASL such as wheat, but also particular applications for other plants such as *Helianthus annuus* or *Brassica napus,* combinations of substitutions and/or traits are desired to achieve an increased level of resistance to herbicides.

In a preferred embodiment, the host plants may be herbicide tolerant *Helianthus annuus.* Preferably, the host plant provides an herbicide tolerance trait (1) having an AHASL with an A122(*At*)T substitution, or (2) an AHASL variant thereof that contains both the A122(*At*)T substitution and a second substitution that can be one or more of P197(A*t*)Q, P197(A*t*)S, P197(A*t*)L, T203(*At*)I, T203(*At*)X, A205(*At*)D, A205(*At*)V, W574(*At*)L, A653(*At*)N, A653(*At*)T, A653(*At*)F, or A653(*At*)V; wherein X may be selected as any natural amino acid.

In another preferred embodiment. the host plant *Helianthus annuus* provides two herbicide tolerance traits, both the trait with the AHASL A122(At)T substitution and a second trait, having an AHASL with an A205(At)V substitution, an AHASL with a P197(*At*)S substitution, an AHASL with a P197(At)L substitution or an AHASL with a W574(*At*)L substitution.

In another preferred embodiment, the host plant *Helianthus annuus* provides a herbicide tolerance trait having one A205(*At*)V substitution. For example, the host plant may be Helianthus annuus Imisun sunflowers that are known as tolerant towards imidazolinones.

In yet another embodiment, the host plant *Helianthus annuus* provides a herbicide tolerance trait having one P197(*At*)L substitution. For example, the host plant may be the ExpressSun® sunflowers which are tolerant to herbicides such as tribenuron, metsulfuron and/or ethametsulfuron-methyl.

In yet another embodiment, the host plant *Helianthus annuus* provides a herbicide tolerance trait having one P197(*At*)S substitution. For example, the host plant may provide the SURES trait sun flowers which are tolerant to herbicides such as tribenuron, trebenuron-methyl and ethametsulfuron-methyl.

In another particular embodiment, the host plant *Helianthus annuus* provides a herbicide tolerance trait with an AHASL having one W574(*At*)L substitution . For example, the host plant may provide the AIR trait, giving a broad range of tolerance to sulfonylurea, imidazolinones, triazolopyrimidine and pyrimidyloxybenzoates.

In yet another preferred embodiment, the host plants may be *Brassica.* Preferably, the *Brassica* contain a herbicide tolerance trait with an AHASL having two substitutions, an A122(*At*)T substitution and an S653(*At*)N substitution.

In another embodiment, the *Brassica* contain a herbicide tolerance trait with an AHASL having two substitutions, an W574(*At*)L substitution and an S653(*At*)N substitution.

In yet another embodiment, the host plant *Brassica* has a herbicide tolerance trait with an AHASL having one A122(*At*)T substitution

In yet another embodiment, both a herbicide tolerance trait with an AHASL having two substitutions of an A122(*At*)T substitution and an S653(*At*)N substitution and one or two additional herbicide tolerance trait(s) that each have AHASL substitution(s) at at least one of the positions A122(*At*), P197(*At*), R199(*At*), T203(*At*), A205(*At*), W574(*At*), S653(*At*), or G654(*At*) are present in the *Brassica* host plant.

In yet another embodiment, a herbicide tolerance trait with an AHASL having two substitutions of W574(*At*)L substitution and an S653(*At*)N substitution and one or two additional herbicide tolerance trait(s) that each have substitution(s) at at least one of the positions A122(*At*), P197(*At*), R199(*At*), T203(*At*), A205(*At*), W574(*At*), S653(*At*), or G654(*At*) are present in the *Brassica* host plant.

In another preferred embodiment, the host plant Brassica comprises a herbicide tolerance trait with an AHASL having one W574(*At*)L substitution.

In another preferred embodiment, the host plant Brassica comprises a herbicide tolerance trait with an AHASL having one A205(*At*)V substitution.

In another embodiment, the host plant *Brassica* has a herbicide tolerance trait having an S653(*At*)N substitution of the AHAS1 enzyme and/or a W574(*At*)L substitution of the AHAS3 enzyme. Example host plants include, but are not limited to, the oil seed rape of Clearfiled OSR® (BASF) which is, for example, tolerant towards imidazolinone herbicide.

In another preferred embodiment, the host plant containing at least one herbicide tolerance trait as described in the previous embodiments is *Brassica napus, Brassica juncea* or *Brassica rapa.*

In a preferred embodiment, the host plant *Oryza sativa* comprises a herbicide tolerance trait having an AHASL with at least one substitution selected from the group consisting of A205(*At*)V, S653(*At*)N, G654(*At*)E, A122(*At*)T, P197(*At*)X wherein X may be selected as any natural amino acid, and W574(*At*)L.

In yet another preferred embodiment, the host plant *Oryza sativa* comprises a herbicide tolerance trait (1) with an AHASL A205(*At*)V substitution, an S653(*At*)N substitution, a G654(*At*)E substitution, a A122(*At*)T substitution or a P197(*At*)X substitution or a W574(At)L substitution, or (2) an AHASL variant thereof that contains one of the substitutions from (1) and a second substitution that can be one or more of P197(*At*)Q, P197(*At*)X, T203(*At*)I, T203(*At*)X, A205(*At*)D, A205(*At*)V, W574(*At*)L, A653(*At*)N, A653(*At*)T, A653(*At*)F, or A653(*At*)V, S653(*At*)N, G654(At)E, A122(*At*)T, W574(*At*)L wherein X may be selected as any natural amino acid. Preferably, an amino acid may only be selected to be substituted once. For example, if A205(*At*)V is selected as the substitution under (1) then A205(*At*)D must not be selected as the second substitution under (2).

In a preferred embodiment, the host plant *Zea mays* contains a herbicide tolerance trait having an AHASL with at least one substitution selected from the group consisting of A205(*At*)V, S653(*At*)N, A122(*At*)T, P197(*At*)X wherein X may be selected as any natural amino acid, and W57 4(*At*)L.

In yet another preferred embodiment, the host plant *Zea mays* contains a herbicide tolerance trait of (1) with an AHASL A205(*At*)V substitution, an S653(*At*)N substitution, an A122(*At*)T substitution, a P197(*At*)X substitution or a W574(*At*)L substitution, or (2) an AHASL variant thereof that contains one of the substitutions from (1) and a second substitution that can be one or more of P197(*At*)Q, P197(*At*)X, T203(*At*)I, T203(*At*)X, A205(*At*)D, A205(*At*)V, W574(*At*)L,1 A653(*At*)N, A653(*At*)T, A653(*At*)F, or A653(*At*)V, S653(*At*)N, A122(*At*)T, W574(*At*)L wherein X may be selected as any natural amino acid. Preferably, an amino acid may only be selected to be substituted once. For example, if A205(*At*)V is selected as the substitution under (1) then A205(*At*)D must not be selected as the second substitution under (2).

In another preferred embodiment, the host plant *Glycine max* (soybean) contains a herbicide tolerance trait with an AHASL having an S653N substitution or an AHASL having both a P197A (or P197S) and a W574L substitution. In another embodiment, the *Glycine max* contains a herbicide tolerance trait having an AHASL with both, an A122T and an S653N substitution.

In yet another preferred embodiment, the host plant *Sorghum* contains a herbicide tolerance trait having an AHASL with an A122T or a W574L substitution.

In another preferred embodiment, the host plant *Triticum spp.* contains a herbicide tolerance trait having an AHASL having an A122T or an S653N substitution. In another embodiment, the host plant *Triticum spp.* contains two herbicide tolerance traits, one AHASL with an A122T substitution and one AHASL with an S653N substitution.

In another preferred embodiment, the host plant *Triticum spp.* contains two herbicide tolerance traits, both having an AHASL with an S653N substitution, respectively.

In another preferred embodiment, the host plant *lens culinaris* contains a herbicide tolerance trait having one AHASL with an A205 V substitution.

In yet another preferred embodiment, the host plant *Hordeum vulgare* contains a herbicide tolerance trait having one AHASL with an S653N substitution.

In one preferred embodiment, the host plant *Phaseolus spp.* contains a herbicide tolerance trait of an AHASL having an S653 N substitution.

In yet another preferred embodiment the host plant *Vigna unguiculata* contains a herbicide tolerance trait of an AHASL having an S653N substitution.

The method of the present invention comprises that the step of treating the seed with an ALS inhibitor or an agriculturally acceptable salt or derivative thereof as described above is followed by a treatment of the emerged host plants with a composition comprising an ALS inhibitor or an agriculturally acceptable salt or derivative thereof wherein the ALS inhibitor is imazamox. In a preferred embodiment, the treatment of the emerged host plant may occur as long as the host plant derived from the treated seed has not been harvested.

As used herein, the term **"agriculturally acceptable salts"** refers to, but is not limited to, any chemical compounds formed from the reaction of an acid with a base with all or part of the hydrogen of the acid replaced by a metal or any other cation and wherein the salts of those cations and the acid addition salts of those acids whose cations and anions, respectively, have no adverse effect on the activity of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, further ammonium and substituted ammonium in which one to four hydrogen atoms are replaced by C₁-C₄-alkyl, hydroxy-C₁-C₄-alkyl, C₁-C₄-alkoxy-C₁-C₄-alkyl, hydroxy-C₁-C₄-alkoxy-C₁-C₄-alkyl, phenyl or benzyl, preferably ammonium, methylammonium, isopropylammonium, dimethylammonium, diisopropylammonium, trimethylammonium, heptylammonium, dodecylammonium, tetradecylammonium, tetramethylammonium, tetraethylammonium, tetrabutylammonium, 2 hydroxyethyl-ammonium (olamine salt), 2-(2-hydroxyeth-1-oxy)eth-1-ylammonium (diglycolamine salt), di(2-hydroxyeth-1-yl)-ammonium (diolamine salt), tris(2-hydroxyethyl)ammonium (trolamine salt), tris(2-hydroxypropyl)ammonium, benzyltrimethylammonium, benzyltriethylammonium, N,N,N-trimethylethanolammonium (choline salt), furthermore phosphonium ions, sulfonium ions, preferably tri(C₁-C₄-alkyl)sulfonium, such as trimethylsulfonium, and sulfoxonium ions, preferably tri(C₁-C₄-alkyl)sulfoxonium, and finally the salts of polybasic amines such as N,N-bis-(3-aminopropyl)methylamine and diethylenetriamine.

Anions of useful acid addition salts are primarily chloride, bromide, fluoride, iodide, hydrogensulfate, methylsulfate, sulfate, dihydrogenphosphate, hydrogenphosphate, nitrate, bicarbonate, carbonate, hexafluorosilicate, hexafluorophosphate, benzoate and also the anions of C₁-C₄-alkanoic acids, preferably formate, acetate, propionate and butyrate.

As used herein, the term **"agriculturally acceptable derivatives"** refers to compounds having a carboxyl group that can be employed in the form of the acid, in the form of an agriculturally suitable salt as mentioned above or else in the form of other agriculturally acceptable derivatives selected from amides, such as mono- and di-C₁-C₆-alkylamides or arylamides, and esters, for example as allyl esters, propargyl esters, C₁-C₁₀-alkyl esters, alkoxyalkyl esters, tefuryl ((tetrahydrofuran-2-yl)methyl) esters and also as thioesters, for example as C₁-C₁₀-alkylthio esters. Preferred mono- and di-C₁-C₆-alkylamides are the methyl and the diethylamides. Preferred arylamides are, for example, the anilides and the 2-chloroanilides. Preferred alkyl esters are, for example, the methyl, ethyl, propyl, isopropyl, butyl, isobutyl, pentyl, mexyl (1 methylhexyl), meptyl (1-methylheptyl), heptyl, octyl or isooctyl (2-ethylhexyl) esters. Preferred C₁-C₄-alkoxy-C₁-C₄-alkyl esters are the straight-chain or branched C₁-C₄-alkoxy ethyl esters, for example the 2-methoxyethyl, 2-ethoxyethyl, 2-butoxyethyl (butotyl), 2-butoxypropyl or 3-butoxypropyl ester. An example of a straight-chain or branched C₁-C₁₀-alkylthio ester is the ethylthio ester.

As used herein, the term "plant" comprises crop plants. The term plants comprises, but is not limited to, plants of the families of Asterceae, Brassicaceae, Poaceae or Leguminosae. Examples of suitable crops include, but not limited to, Allium cepa, Ananas comosus, Arachis hypogaea, Asparagus officinalis, Avena sativa, Beta vulgaris spec. altissima, Beta vulgaris spec. rapa, Brassica napus var. napus, Brassica napus var. napobrassica, Brassica rapa var. silvestris, Brassica oleracea, Brassica nigra, Brassica juncea, Brassica campestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot es-culenta, Medicago sativa, Musa spec., Nicotiana tabacum (N.rustica), Olea europaea, Oryza sativa, Phaseolus lunatus, Phaseolus vulgaris, Picea abies, Pinus spec., Pistacia vera, Pisum sativum, Prunus avium, Prunus persica, Pyrus communis, Prunus armeniaca, Prunus cerasus, Prunus dulcis and prunus domestica, Ribes sylvestre, Ricinus communis, Saccharum officinarum, Secale cereale, Sinapis alba, Solanum tuberosum, Sorghum bicolor (s. vulgare), Theobroma cacao, Trifolium pratense, Triticum aestivum, Triticale, Triticum durum, Vicia faba, Vitis vinifera, Zea mays. Preferred crops are Arachis hypogaea, Beta vulgaris spec. altissima, Brassica napus var. napus, Brassica oleracea, Brassica juncea, Citrus limon, Citrus sinensis, Coffea arabica (Coffea canephora, Coffea liberica), Cynodon dactylon, Glycine max, Gossypium hirsutum, (Gossypium arboreum, Gossypium herbaceum, Gossypium vitifolium), Helianthus annuus, Hordeum vulgare, Juglans regia, Lens culinaris, Linum usitatis-simum, Lycopersicon lycopersicum, Malus spec., Medicago sativa, Nicotiana tabacum (N.rustica), Olea europaea, Oryza sativa , Phaseolus lunatus, Phaseolus vulgaris, Pistacia vera, Pisum sativum, Prunus dulcis, Saccharum officinarum, Secale cereale, Solanum tuberosum, Sorghum bicolor (s. vulgare), Triticale, Triticum aestivum, Triticum durum, Vicia faba, Vitis vinifera and Zea mays.

Furthermore, the term plant also covers **genetically modified plants.** The term "genetically modified plants" is to be understood as plants, which genetic material has been modified by the use of recombinant DNA techniques in a way that under natural circumstances it cannot readily be obtained by cross breeding, mutations, natural recombination, breeding, mutagenesis, or genetic engineering. Typically, one or more genes have been integrated into the genetic material of a genetically modified plant in order to improve certain properties of the plant. Such genetic modifications also include, but are not limited to, targeted post-transtional modification of protein(s), oligo- or polypeptides e. g. by glycosylation or polymer additions such as prenylated, acetylated or farnesylated moieties or PEG moieties. The methods for generating genetically modified plants are generally known to the person skilled in the art.
Furthermore, plants are also covered that are by the use of recombinant DNA techniques capable to synthesize one or more insecticidal proteins, especially those known from the bacterial genus Bacillus, particularly from Bacillus thuringiensis, such as endotoxins, e. g. CryIA(b), Cry-IA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e.g. Photorhabdus spp. or Xenorhabdus spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Her-culex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); New-Leaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme)

Moreover, the term plants also covers plants derived from the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e.g. EP-A 392 225), plant disease resistance genes (e.g. potato cultivars, which express resistance genes acting against Phytophthora infestans derived from the mexican wild potato Solanum bulbocastanum) or T4-lysozym (e.g. potato cultivars capable of synthesizing these proteins with increased resistance against bacteria such as Erwinia amylvora). The methods for producing such genetically modified plants are generally known to the person skilled in the art and are described, e.g. in the publications mentioned above.

Furthermore, the term plants also includes plants created by the use of recombinant DNA techniques which are capable to synthesize one or more proteins to increase the productivity (e.g. bio mass production, grain yield, starch content, oil content or protein content), tolerance to drought, salinity or other growth-limiting environmental factors or tolerance to pests and fungal, bacterial or viral pathogens of those plants.

Furthermore, the term plants also includes plants that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e.g. potatoes that produce increased amounts of amylopectin (e.g. Amflora® potato, BASF SE, Germany).

The term "plants" also includes plants that have been modified by breeding, mutagenesis or genetic engineering, e.g. have been **rendered tolerant** to applications of specific classes of herbicides. Tolerance to classes of herbicides has been developed such as auxin herbicides such as dicamba or 2,4-D; bleacher herbicides such as hydroxyphenylpyruvate dioxygenase (HPPD) inhibitors or phytoene desaturase (PDS) inhibitors; acetolactate synthase (ALS) inhibitors such as sulfonyl ureas or imidazolinones; enolpyruvyl shikimate 3-phosphate synthase (EPSP) inhibitors such as glyphosate; glutamine synthetase (GS) inhibitors such as glufosinate; protoporphyrinogen-IX oxidase (PPO) inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are, for example, described in Pest Management Science 61. 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein. Examples of these herbicide resistance technologies are also described in US 2008/0028482, US2009/0029891, WO 2007/143690, WO 2010/080829, US 6307129, US 7022896, US 2008/0015110, US 7,632,985, US 7105724, and US 7381861, each herein incorporated by reference. Several cultivated plants have been rendered tolerant to herbicides by conventional methods of breeding (mutagenesis), e.g Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate, dicamba, imidazolinones and glufosinate, some of which are under development or commercially available under the brands or trade names RoundupReady® (glyphosate tolerant, Monsanto, USA), Cultivance® (imidazolinone tolerant, BASF SE, Germany) and LibertyLink® (glufosinate tolerant, Bayer CropScience, Germany).

As used herein, the term **"host plant"** includes, but is not limited to, plants that may be affected by parasite weeds. The term **"emerged host plant"** preferably refers to host plants wherein the seed has been sown and the plant subsequently developed to grow upwards so that it is partially above ground.

As used herein, the term "(*At*)" as in, e.g., A122(*At*)T refers to an amino acid substitution, for example of Alanine to Threonine, wherein the numbering of the amino acid refers to the respective number of the *Arabidopsis thaliana* protein .

As used herein, the term **"seed"** comprises seed of all types, such as corns, seeds, fruits, tubers, seedlings and similar forms. The seed may preferably be seed of the crop plants mentioned above, but also the seed of transgenic plants or plants obtained by customary breeding methods.

As used herein, the term **"parasitic weed"** refers to any kind of plant that negatively affects the host plant and may even be pathogenic. Parasitic weed comprises stem parasites and root parasites. Stem parasites occur in several families, and pathogenic members include some mistletoes (and dodder (Cuscuta and Cassytha). Root parasites are more common and are found in diverse taxonomic groups. Some of the most economically important root pathogens are in the broomrape family, Orobanchaceae. The term parasitic weed also includes any holoparasites, hemiparasites, obligate parasites, or facultative parasites. Facultative parasites contain chlorophyll and can be grown to maturity without hosts. Obligate parasites, on the other hand, require a host for maturation. Hemiparasites contain chlorophyll when mature (hence are photosynthetic) and obtain water, with its dissolved nutrients, by connecting to the host xylem via the haustorium. Holoparasites lack chlorophyll and must rely totally on the contents of the host xylem and phloem Although these definitions imply absolute and discrete categories, some parasitic plants are intermediate between the hemi- and holoparasitic condition, e.g. Cuscuta (dodder).

As used herein, the term **"seed coating"** preferably refers applying a coat around the seed. Preferably, the coat comprises a very thin layer, preferably of less than 0.1 µm such as in the case of film coating to a thicker form of covering of seed and may contain fertiliziers, fungicides insecticides, growth promoters and/or seed treatment, such as the ALS inhibitor seed treatment, as well as an inert carrier and a polymer outer shell.

As used herein, the term **"seed pelleting"** refers to adding artificial coverings to seeds, which can be used to cover irregular seed shapes and adding chemicals to the pellet matrix. The pellet matrix may comprise filling materials and glue such as loam, starch, tyllose (cellulose derivative), fertiliziers, insecticides, growth promoters and/or seed treatment such as the ALS inhibitor seed treatment, or polyacrylate/polyacrylamide polymers. A film coat may optionally be added onto the pelleting layer. **Seed pelleting** also covers increasing the size of very small seeds. Examples of very small seeds are horticultural seeds. This may provide improved planting features, e.g. singulate planting, the use of planting machines, or precise placement and visibility in/on the soil.

As used herein, the term **"herbicide tolerant"** or **"herbicide tolerance"** means that the plant is not negatively affected by the herbicide. Preferably, the plant is not affected when the herbicide is used in concentrations effective to protect the plant from the undesired weeds, especially undesired parasitic weeds. The herbicide tolerance can be naturally occurring or induced by genetic engineering or selection of variants produced by tissue culture or mutagenesis.

As used herein, the term **"herbicide"** comprises any substance used to destroy or inhibit the growth of plants, preferably weeds. Non-limiting examples of herbicides comprise acetamides such as acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor; amino acid derivatives such as bilanafos, glyphosate, glufosinate, sulfosate; aryloxyphenoxypropionates such as clodinafop, cyhalofop-butyl, fenoxaprop, fluazifop, haloxyfop, metamifop, propaquizafop, quizalofop, quizalofop-P-tefuryl; Bipyridyls such as diquat, paraquat; (thio)carbamates such as asulam, butylate, carbetamide, desmedipham, dimepiperate, eptam (EPTC), esprocarb, molinate, orbencarb, phenmedipham, prosulfocarb, pyributicarb, thiobencarb, triallate; cyclohexanediones such as butroxydim, clethodim, cycloxydim, profoxydim, sethoxydim, tepraloxydim, tralkoxydim; dinitroanilines such as benfluralin, ethalfluralin, oryzalin, pendimethalin, prodiamine, trifluralin; diphenyl ethers such as acifluorfen, aclonifen, bifenox, diclofop, ethoxyfen, fomesafen, lactofen, oxyfluorfen; hydroxybenzonitriles such as bomoxynil, dichlobenil, ioxynil; imidazolinones such as imazamethabenz, imazamox, imazapic, imazapyr, imazaquin, imazethapyr; phenoxy acetic acids such as clomeprop, 2,4-dichlorophenoxyacetic acid (2,4-D), 2,4-DB, dichlorprop, MCPA, MCPA-thioethyl, MCPB, Mecoprop; pyrazines such as chloridazon, flufenpyr-ethyl, fluthiacet, norflurazon, pyridate; pyridines such as aminopyralid, clopyralid, diflufenican, dithiopyr, fluridone, fluroxypyr, picloram, picolinafen, thiazopyr; sulfonyl ureas such as amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1 ,2-b]pyridazin-3-yl)sulfonyl)-3-(4,6-dimethoxypyrimidin-2-yl)urea; triazines such as ametryn, atrazine, cyanazine, dimethametryn, ethiozin, hexazinone, metamitron, metribuzin, prometryn, simazine, terbuthylazine, terbutryn, triaziflam; ureas such as chlorotoluron, daimuron, diuron, fluometuron, isoproturon, linuron, methabenzthiazuron, tebuthiuron; other acetolactate synthase inhibitors such as bispyribac-sodium, cloransulam-methyl, diclosulam, florasulam, flucarbazone, flumetsulam, metosulam, orthosulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam; and others such as amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoropyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluorophenyl)-pyridine-2-carboxylic acid methyl ester.

### Reference Example 1

The experiment was carried out as field trial in Turkey on a plot of about 24 m².

Seeds of the imidazolinone tolerant sunflower variety CLHAplus - Paraiso 1000 were used. Prior to sowing, the seeds were treated with Imazamox by liquid seed dressing.

The sunflower plants emerged after 18 days and were harvested about 3,5 months after sowing. The date of appearance of the parasitic weed Orobanche as well as the number of Orobanche per plot were recorded, the latter 2 days before harvest.

In Table 1, the results are summarized:

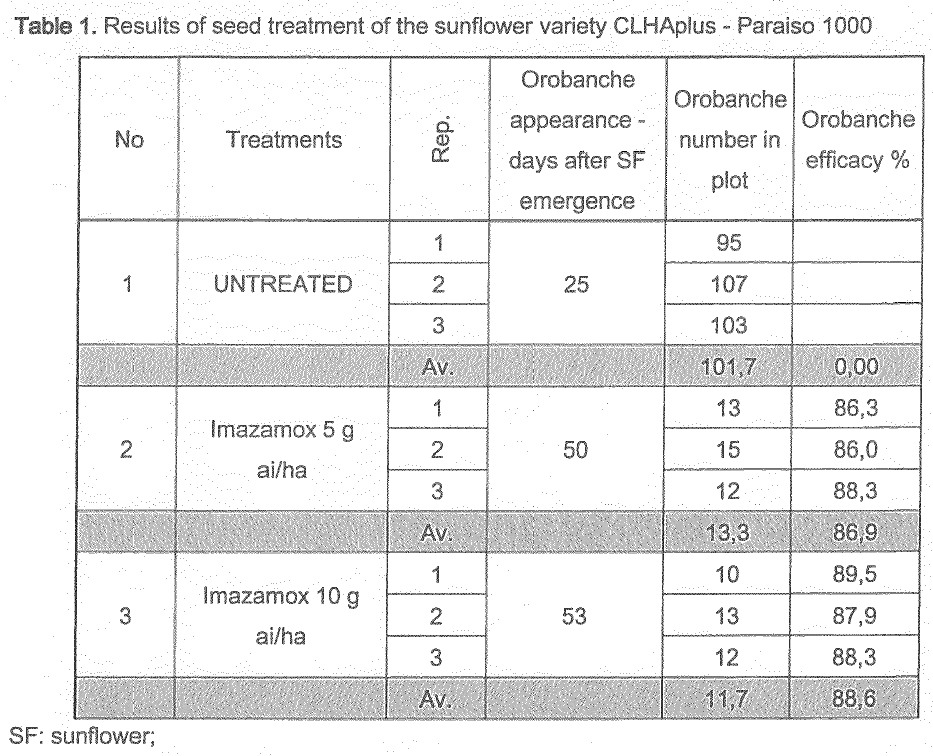

Orobanche appeared significantly later in plots with Imazamox treated seed. Moreover, the number of Orobanche observed per plot was significantly reduced by the seed treatment (101,7 vs. 13,3 and 11,7 respectively).

## Claims

1. A method for controlling parasitic weeds of host plants, comprising
the step of treating the seed of said host plants with a composition comprising an acetolactate synthase (ALS) inhibitor or an agriculturally acceptable salt or derivative thereof, wherein the composition comprises as the ALS inhibitor an imidazolinone selected from the group consisting of imazamox,
wherein the step of treating the seed with an ALS inhibitor is followed by
the step of a treatment of the emerged host plants with a composition comprising an acetolactate synthase (ALS) inhibitor or an agriculturally acceptable salt or derivative thereof, wherein the ALS inhibitor is imazamox,
wherein the agriculturally acceptable derivative is a carboxyl group derivative selected from a carboxylic acid, a carboxamide or a carboxylic acid ester.

2. The method as claimed in claim 1, wherein the parasitic weed is from the genus Orobanche, from the genus Conopholis, from the genus Striga, or from the genus Cuscuta.

3. The method as claimed in claim 1 or 2, wherein the host plant is selected from the group consisting of the family of Asteraceae, the family of Brassicaceae, the family of Poaceae, the family of Solanaceae, or the family of Leguminosae.

4. The method as claimed in any one of the preceding claims, wherein the host plant is selected from the group consisting of
a) *Helianthus annuus* containing a herbicide tolerance trait of (1) an AHASL (acetohydroxyacid synthase large subunit) having an A122(*At*)T substitution, or (2) an AHASL variant thereof that contains both the A122(*At*)T substitution and a second substitution that can be one or more of P197(*At*)Q, P197(*At*)S, P197(*At*)L T203(*At*)I, T203(*At*)X, A205(*At*)D, A205(*At*)V, W574(*At*)L, A653(*At*)N, A653(*At*)T, A653(*At*)F, or A653(*At*)V, wherein X may be selected as any natural amino acid;
b) *Helianthus annuus* containing two herbicide tolerance traits, the trait with the AHASL A122(*At*)T substitution and a second trait having an AHASL with an A205(*At*)V substitution, an AHASL with a P197(*At*)S substitution, an AHASL with a P197(*At*)L substitution or an AHASL with a W574(*At*)L substitution;
c) *Helianthus annuus* containing a herbicide tolerance trait having an AHASL with one A205(*At*)V substitution;
d) *Helianthus annuus* containing a herbicide tolerance trait trait having an AHASL with one P197(*At*)L substitution;
e) *Helianthus annuus* containing a herbicide tolerance trait having an AHASL with one P197(*At*)S substitution;
f) *Helianthus annuus* containing a herbicide tolerance trait having an AHASL with one W574(*At*)L substitution;
g) *Brassica* containing a herbicide tolerance trait having an AHASL with two substitutions, an A122(*At*)T substitution and an S653(*At*)N substitution;
h) *Brassica* containing a herbicide tolerance trait having an AHASL with two substitutions, an W574(*At*)L substitution and an S653(*At*)N substitution;
i) *Brassica* containing both the herbicide tolerance trait in g) or h) and one or two additional herbicide tolerance trait(s) that each have AHASL substitution(s) at at least one of the positions A122(*At*), P197(*At*), R199(*At*), T203(*At*), A205(*At*), W574(*At*), S653(*At*), or G654(*At*);
j) *Brassica* containing a herbicide tolerance trait having an AHASL with one A122(*At*)T substitution;
k) *Brassica* containing a herbicide tolerance trait having an AHASL with one W574(*At*)L substitution;
l) *Brassica* containing a herbicide tolerance trait having an AHASL with one A205(*At*)V substitution;
m) *Brassica* containing a herbicide tolerance trait having an S653(*At*)N substitution of the AHAS1 enzyme and/or a W574(*At*)L substitution of the AHAS3 enzyme.
n) *Oryza sativa* containing a herbicide tolerance trait having an AHASL with at least one substitution selected from the group consisting of A205(*At*)V, S653(*At*)N, G654(*At*)E, A122(*At*)T, P197(*At*)X wherein X may be selected as any natural amino acid, and W574(*At*)L;
o) *Oryza sativa* containing a herbicide tolerance trait of (1) an AHASL with an A205(*At*)V substitution, an S653(At)N substitution, a G654(At)E substitution, an A122(At)T substitution or a P197(At)X substitution or a W574(At)L substitution , or (2) an AHASL variant thereof that contains one of the substitutions from (1) and a second substitution that can be one or more of P197(*At*)Q, P197(*At*)X, T203(*At*)I, T203(*At*)X, A205(*At*)D, A205(*At*)V, W574(*At*)L, A653(*At*)N, A653(*At*)T, A653(*At*)F, or A653(*At*)V, S653(*At*)N, G654(At)E, A122(*At*)T, W574(*At*)L wherein X may be selected as any natural amino acid;
p) *Zea mays* containing a herbicide tolerance trait having an AHASL with at least one substitution selected from the group consisting of A205(*At*)V, S653(*At*)N, A122(*At*)T, P197(*At*)X wherein X may be selected as any natural amino acid, and W574(*At*)L;
q) *Zea mays* containing a herbicide tolerance trait of (1) an AHASL with an A205(*At*)V substitution, an S653(At)N substitution, an A122(At)T substitution, a P197(At)X substitution or a W574(At)L substitution, or (2) an AHASL variant thereof that contains one of the substitutions from (1) and a second substitution that can be one or more of P197(*At*)Q, P197(*At*)X, T203(*At*)I, T203(*At*)X, A205(*At*)D, A205(*At*)V, W574(*At*)L, A653(*At*)N, A653(*At*)T, A653(*At*)F, A653(*At*)V, S653(*At*)N, A122(*At*)T, or W574(*At*)L wherein X may be selected as any natural amino acid.

5. The method of claim 4 option g) to m), wherein the Brassica is selected from the group consisting of *Brassica napus, Braccisajuncea* and *Brassica rapa.*

## Patentansprüche

1. Verfahren zur Bekämpfung parasitischer Unkräuter auf Wirtspflanzen, umfassend
den Schritt der Behandlung des Saatguts der Wirtspflanzen mit einer einen Acetolactatsynthase(ALS)-Inhibitor oder ein landwirtschaftlich unbedenkliches Salz oder Derivat davon umfassenden Zusammensetzung, wobei die Zusammensetzung als ALS-Inhibitor ein aus der aus Imazamox bestehenden Gruppe ausgewähltes Imidazolinon umfasst,
wobei sich an den Schritt der Behandlung des Saatguts mit einem ALS-Inhibitor
der Schritt der Behandlung der auflaufenden Wirtspflanzen mit einer einen Acetolactatsynthase(ALS)-Inhibitor oder ein landwirtschaftlich unbedenkliches Salz oder Derivat davon umfassenden Zusammensetzung anschließt, wobei es sich bei dem ALS-Inhibitor um Imazamox handelt,
wobei es sich bei dem landwirtschaftlich unbedenklichen Derivat um ein aus einer Carbonsäure, einem Carbonsäureamid und einem Carbonsäureester ausgewähltes Carboxylgruppenderivat handelt.

2. Verfahren nach Anspruch 1, wobei das parasitische Unkraut aus der Gattung Orobanche, aus der Gattung Conopholis, aus der Gattung Striga oder aus der Gattung Cuscuta stammt.

3. Verfahren nach Anspruch 1 oder 2, wobei die Wirtspflanze aus der aus der Familie der Asteraceae, der Familie der Brassicaceae, der Familie der Poaceae, der Familie der Solanaceae und der Familie der Leguminosae bestehenden Gruppe ausgewählt ist.

4. Verfahren nach einem der vorhergehenden Ansprüche, wobei die Wirtspflanze aus der aus den Folgenden bestehenden Gruppe ausgewählt ist:
a) *Helianthus annuus* mit einem Herbizidtoleranzmerkmal (1) einer AHASL (Acetohydroxyacid Synthase Large Subunit) mit einer A122(*At*)T-Substitution oder (2) einer AHASL-Variante davon, die sowohl die A122(A*t*)T-Substitution als auch eine zweite Substitution, bei der es sich um eine oder mehrere von P197(A*t*)Q, P197(A*t*)S, P197(A*t*)L, T203(A*t*)I, T203(*At*)X, A205(*At*)D, A205(*At*)V, W574(A*t*)L, A653(At)N, A653(At)T, A653(At)F oder A653(At)V handeln kann, wobei es sich bei X um eine beliebige natürliche Aminosäure handeln kann,
b) *Helianthus annuus* mit zwei Herbizidtoleranzmerkmalen, dem Merkmal mit der AHASL A122(A*t*)T-Substitution und einem zweiten Merkmal mit einer AHASL mit einer A205(A*t*)V-Substitution, einer AHASL mit einer P197(A*t*)S-Substitution, einer AHASL mit einer P197(A*t*)L-Substitution oder einer AHASL mit einer W574(A*t*)-L-Substitution,
c) *Helianthus annuus* mit einem Herbizidtoleranzmerkmal mit einer AHASL mit einer A205(A*t*)V-Substitution,
d) *Helianthus annuus* mit einem Herbizidtoleranzmerkmal mit einer AHASL mit einer P197(A*t*)L-Substitution,
e) *Helianthus annuus* mit einem Herbizidtoleranzmerkmal mit einer AHASL mit einer P197(A*t*)S-Substitution,
f) *Helianthus annuus* mit einem Herbizidtoleranzmerkmal mit einer AHASL mit einer W574(A*t*)L-Substitution,
g) *Brassica* mit einem Herbizidtoleranzmerkmal mit einer AHASL mit zwei Substitutionen, einer A122(A*t*)T-Substitution und einer S653(A*t*)N-Substitution,
h) *Brassica* mit einem Herbizidtoleranzmerkmal mit einer AHASL mit zwei Substitutionen, einer W574(A*t*)L-Substitution und einer S653(A*t*)N-Substitution,
i) *Brassica* mit dem Herbizidtoleranzmerkmal aus g) oder h) und einem oder zwei zusätzlichen Herbizidtoleranzmerkmalen, jeweils mit AHASL-Substitution(en) in mindestens einer der Positionen A122(A*t*), P197(A*t*), R199(A*t*), T203(A*t*), A205(A*t*), W574(A*t*), S653(A*t*) oder G654 (At) ,
j) *Brassica* mit einem Herbizidtoleranzmerkmal mit einer AHASL mit einer A122(A*t*)T-Substitution,
k) *Brassica* mit einem Herbizidtoleranzmerkmal mit einer AHASL mit einer W574(A*t*)L-Substitution,
l) *Brassica* mit einem Herbizidtoleranzmerkmal mit einer AHASL mit einer A205(A*t*)V-Substitution,
m) *Brassica* mit einem Herbizidtoleranzmerkmal mit einer S653(A*t*)N-Substitution des AHAS1-Enzyms und/oder einer W574(A*t*)L-Substitution des AHAS3-Enzyms,
n) *Oryza sativa* mit einem Herbizidtoleranzmerkmal mit einer AHASL mit mindestens einer Substitution ausgewählt aus der Gruppe bestehend aus A205(*At*)V, S653(A*t*)N, G654(At)E, A122(At)T, P197(At)X, wobei X für eine beliebige natürliche Aminosäure steht, und W574(At)L,
o) *Oryza sativa* mit einem Herbizidtoleranzmerkmal (1) einer AHASL mit einer A205 (A*t*)V-Substitution, einer S653(At)N-Substitution, einer G654(At)E-Substitution, einer A122(At)T-Substitution oder einer P197(At)X-Substitution oder einer W574(At)L-Substitution oder (2) einer AHASL-Variante davon, die eine der Substitutionen aus (1) und eine zweite Substitution, bei der es sich um eine oder mehrere von P197(A*t*)Q, P197(A*t*)X, T203(A*t*)I, T203(*At*)X, A205(*At*)D, A205(A*t*)V, W574(A*t*)L, A653(A*t*)N, A653(A*t*)T, A653(A*t*)F oder A653(A*t*)V, S653(A*t*)N, G654(A*t*)E, A122(A*t*)T, W574(A*t*)L handeln kann, enthält, wobei X für eine beliebige natürliche Aminosäure steht,
p) *Zea mays* mit einem Herbizidtoleranzmerkmal mit einer AHASL mit mindestens einer Substitution ausgewählt aus der Gruppe bestehend aus A205(*At*)V, S653(A*t*)N, A122(A*t*)T, P197(A*t*)X, wobei X für eine beliebige natürliche Aminosäure steht, und W574(A*t*)L,
q) *Zea mays* mit einem Herbizidtoleranzmerkmal (1) einer AHASL mit einer A205(A*t*)V-Substitution, einer S653(A*t*)N-Substitution, einer A122(A*t*)T-Substitution, einer P197(A*t*)X-Substitution oder einer W574(A*t*)L-Substitution oder (2) einer AHASL-Variante davon, die eine der Substitutionen aus (1) und eine zweite Substitution, bei der es sich um ein oder mehrere von P197(A*t*)Q, P197(A*t*)X, T203(A*t*)I, T203(*At*)X, A205(*At*)D, A205(*At*)V, W574(A*t*)L, A653(A*t*)N, A653(A*t*)T, A653(A*t*)F, A653(A*t*)V, S653(A*t*)N, A122(A*t*)T oder W574(A*t*)L handeln kann, enthält, wobei X für eine beliebige natürliche Aminosäure steht.

5. Verfahren nach Anspruch 4, Option g) bis m), wobei die Brassica aus der aus *Brassica napus, Brassica juncea* und *Brassica* rapa bestehenden Gruppe ausgewählt ist.

## Revendications

1. Méthode de contrôle d'adventices parasites de plantes hôtes, comprenant
l'étape consistant à traiter les semences desdites plantes hôtes par une composition comprenant un inhibiteur de l'acétolactate synthase (ALS) ou un sel ou dérivé acceptable sur le plan agricole de celui-ci, où la composition comprend, comme inhibiteur d'ALS, une imidazolinone choisie dans le groupe constitué par l'imazamox,
où l'étape consistant à traiter les semences par un inhibiteur d'ALS est suivie par
l'étape consistant à traiter les plantes hôtes levées par une composition comprenant un inhibiteur de l'acétolactate synthase (ALS) ou un sel ou dérivé acceptable sur le plan agricole de celui-ci, où l'inhibiteur d'ALS est l'imazamox,
où le dérivé acceptable sur le plan agricole est un dérivé de groupement carboxyle choisi parmi un acide carboxylique, un carboxamide ou un ester d'acide carboxylique.

2. Méthode selon la revendication 1, dans laquelle l'adventice parasite est issue du genre *Orobanche,* du genre *Conopholis,* du genre *Striga,* ou du genre *Cuscuta.*

3. Méthode selon la revendication 1 ou 2, dans laquelle la plante hôte est choisie dans le groupe constitué par la famille *Asteraceae,* la famille *Brassicaceae,* la famille Poaceae, la famille *Solanaceae,* ou la famille *Leguminosae.*

4. Méthode selon l'une quelconque des revendications précédentes, dans laquelle la plante hôte est choisie dans le groupe constitué par
a) *Helianthus annuus* contenant un caractère de tolérance aux herbicides (1) d'une AHASL (grande sous-unité de l'acétohydroxyacide synthase) ayant une substitution A122(At)T, ou (2) d'un variant d'AHASL de celle-ci qui contient la substitution A122(*At*)T ainsi qu'une deuxième substitution pouvant être une ou plusieurs parmi P197(A*t*)Q, P197(*At*)S, P197(*At*)L, T203(A*t*)I, T203(*At*)X, A205(*At*)D, A205(*At*)V, W574(*At*)L, A653(*At*)N, A653(A*t*)T, A653(*At*)F, ou A653(*At*)V, où X peut être choisi parmi un acide aminé naturel quelconque ;
b) *Helianthus annuus* contenant deux caractères de tolérance aux herbicides, le caractère ayant la substitution A122(*At*)T d'AHASL et un deuxième caractère ayant une AHASL ayant une substitution A205(*At*)V, une AHASL ayant une substitution P197(*At*)S, une AHASL ayant une substitution P197(*At*)L ou une AHASL ayant une substitution W574(*At*)L ;
c) *Helianthus annuus* contenant un caractère de tolérance aux herbicides ayant une AHASL ayant une substitution A205(*At*)V ;
d) *Helianthus annuus* contenant un caractère de tolérance aux herbicides ayant une AHASL ayant une substitution P197(*At*)L ;
e) *Helianthus annuus* contenant un caractère de tolérance aux herbicides ayant une AHASL ayant une substitution P197(*At*)S ;
f) *Helianthus annuus* contenant un caractère de tolérance aux herbicides ayant une AHASL ayant une substitution W574(*At*)L ;
g) *Brassica* contenant un caractère de tolérance aux herbicides ayant une AHASL ayant deux substitutions, une substitution A122(*At*)T et une substitution S653(*At*)N ;
h) *Brassica* contenant un caractère de tolérance aux herbicides ayant une AHASL ayant deux substitutions, une substitution W574(*At*)L et une substitution S653(*At*)N ;
i) *Brassica* contenant le caractère de tolérance aux herbicides de g) ou h) ainsi qu'un ou deux caractères supplémentaires de tolérance aux herbicides ayant chacun une ou plusieurs substitutions d'AHASL au niveau d'au moins l'une des positions A122(*At*), P197(*At*), R199(*At*), T203(*At*), A205(*At*), W574(*At*), S653(*At*), ou G654(*At*);
j) *Brassica* contenant un caractère de tolérance aux herbicides ayant une AHASL ayant une substitution A122(*At*)T;
k) *Brassica* contenant un caractère de tolérance aux herbicides ayant une AHASL ayant une substitution W574(*At*)L;
l) *Brassica* contenant un caractère de tolérance aux herbicides ayant une AHASL ayant une substitution A205(*At*)V;
m) *Brassica* contenant un caractère de tolérance aux herbicides ayant une substitution S653(*At*)N de l'enzyme AHAS1 et/ou une substitution W574(*At*)L de l'enzyme AHAS3 ;
n) *Oryza sativa* contenant un caractère de tolérance aux herbicides ayant une AHASL ayant au moins une substitution choisie dans le groupe constitué par A205(*At*)V, S653(*At*)N, G654(*At*)E, A122(*At*)T, P197(*At*)X où X peut être choisi parmi un acide aminé naturel quelconque, et W574(*At*)L ;
o) *Oryza sativa* contenant un caractère de tolérance aux herbicides (1) d'une AHASL ayant une substitution A205(At)V, une substitution S653(*At*)N, une substitution G654(At)E, une substitution A122(*At*)T ou une substitution P197(*At*)X ou une substitution W574(*At*)L, ou (2) d'un variant d'AHASL de celle-ci qui contient l'une des substitutions de (1) et une deuxième substitution pouvant être l'une ou plusieurs parmi P197(*At*)Q, P197(*At*)X, T203(*At*)I, T203(*At*)X, A205(*At*)D, A205(*At*)V, W574(*At*)L, A653(*At*)N, A653(A*t*)T, A653(*At*)F, ou A653(*At*)V, S653(*At*)N, G654(*At*)E, A122(*At*)T, W574(*At*)L, où X peut être choisi parmi un acide aminé naturel quelconque ;
p) *Zea mays* contenant un caractère de tolérance aux herbicides ayant une AHASL ayant au moins une substitution choisie dans le groupe constitué par A205(*At*)V, S653(*At*)N, A122(*At*)T, P197(*At*)X où X peut être choisi parmi un acide aminé naturel quelconque, et W574(*At*)L;
q) *Zea mays* contenant un caractère de tolérance aux herbicides (1) d'une AHASL ayant une substitution A205(*At*)V, une substitution S653(*At*)N, une substitution A122(*At*)T, une substitution P197(*At*)X ou une substitution W574(At)L, ou (2) d'un variant d'AHASL de celle-ci qui contient l'une des substitutions de (1) et une deuxième substitution pouvant être l'une ou plusieurs parmi P197(A*t*)Q, P197(*At*)X, T203(A*t*)I, T203(*At*)X, A205(*At*)D, A205(*At*)V, W574(*At*)L, A653(*At*)N, A653(*At*)T, A653(*At*)F, A653(*At*)V, S653(*At*)N, A122(*At*)T, ou W574(*At*)L où X peut être choisi parmi un acide aminé naturel quelconque.

5. Méthode selon la revendication 4, option g) à m), où *Brassica* est choisi dans le groupe constitué par *Brassica napus, Brassica juncea* et *Brassica* rapa.
